# EUROPÄISCHE PATENTSCHRIFT

(11) **EP 3 032 126 B1**
(45) Veröffentlichungstag und Bekanntmachung des Hinweises auf die Patenterteilung: **14.09.2022**
(21) Anmeldenummer: 14197590.4
(22) Anmeldetag: 12.12.2014
(51) Int. Cl.: F16D 65/12, C04B 35/00, F16D 69/02

(54) **Keramische Bremsscheibe**
Ceramic brake disc
Disque de frein en céramique

(43) Veröffentlichungstag der Anmeldung: 15.06.2016
(73) Patentinhaber: Brembo SGL Carbon Ceramic Brakes GmbH, 86405 Meitingen (DE)
(72) Erfinder: Kienzle, Andreas, 86753 Möttingen OT Balgheim (DE); Reichardt, Fabian, 86830 Schwabmünchen (DE)
(74) Vertreter: Fabiano, Piero

(56) Entgegenhaltungen:
- EP-A1- 0 826 651
- EP-A1- 1 632 465
- EP-A2- 1 508 719
- WO-A2-2006/115755

## Beschreibung

Die Erfindung betrifft faserverstärkte keramische Bremsscheiben und ein Verfahren zur Herstellung von faserverstärkten keramischen Bremsscheiben.

Bremsscheiben aus faserverstärkter Keramik sind bereits aus der DE 44 38 455 C1 sowie der DE 198 34 542 A1 bekannt. Die DE 44 38 455 C1 zeigt ein Verfahren zur Herstellung einer Reibeinheit, bei der ein poröser Kohlenstoffkörper mit flüssigem Silizium infiltriert wird (im Folgenden auch Silizierung genannt). Hierbei wandelt sich das Silizium mit dem Kohlenstoff in die Keramik Siliziumkarbid (SiC) um. Der Kohlenstoffkörper ist vorzugsweise als carbonfaserverstärkter Kohlenstoffkörper (CFC) ausgeführt. Hierbei liegen Carbonfasern in einer Matrix aus Kohlenstoff vor.

Durch die Silizierung und die darauffolgende notwendige Abkühlung bilden sich üblicherweise Risse und Poren in der Bremsscheibe, aufgrund der unterschiedlichen Wärmeausdehnungskoeffizienten der verschiedenen in der Bremsscheibe enthaltenen Materialien. Diese Risse, bzw. Poren, schaffen einen Zugang zum Inneren der Bremsscheibe, wodurch im Betrieb der Bremsscheibe Fremdstoffe wie Wasser, Salz und Sauerstoff in die Bremsscheibe eindringen können. Durch die Risse, bzw. Poren freigelegtes Material, wie z.B. nicht in Siliziumcarbid umgewandelter Kohlenstoff oder metallisches Silizium, ist so den Umwelteinflüssen ausgesetzt und kann bei den Temperaturen, wie sie im Bremsbetrieb entstehen können, beispielsweise oxidieren. In die Risse gelangende Salzlösungen führen überdies zur Bildung von Salzkristallen innerhalb der Bremsscheibe. All das kann zu einer Schwächung des Materials der Bremsscheibe und damit zu geringeren Standzeiten führen.

Die DE 101 34 059 C1 schlägt das Aufbringen eines Lacks vor, um die Bremsscheibe vor der Oxidation zu schützen. Dieser Lack soll jedoch nach Lehre der DE 101 34 059 C1 nicht auf die Reibfläche der Bremsscheibe aufgebracht werden, da er die Bremseigenschaften verschlechtert. Gerade auf der Reibfläche der Bremsscheibe sind die Auswirkungen von Oxidation und Einlagerung von Salzen jedoch am drastischsten.

Diese Umwelteinflüsse wirken sich sowohl auf Bremsscheiben ohne gesonderte Reibschicht, als auch auf Bremsscheiben mit gesonderter Reibschicht, sogenannte mehrschichtige Reibscheiben, aus. Mehrschichtige Reibscheiben sind beispielsweise aus der DE 44 38 456 A1 bekannt. Der Tragkörper und die Reibschichten umfassen beide ein keramisches, meist faserverstärktes Material, wobei sich deren Zusammensetzungen im Detail unterscheiden. Beim Tragkörper kommt es in erster Linie auf hohe Festigkeit an, während die Reibschichten vorzugsweise gute Reibeigenschaften und hohe Verschleißbeständigkeit aufweisen sollen. Aus diesen unterschiedlichen Anforderungsprofilen ergeben sich entsprechend optimierte Materialzusammensetzungen.

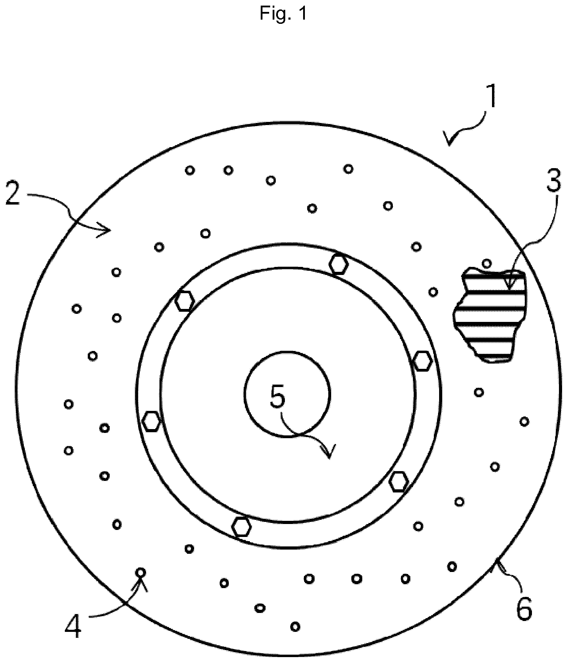

Tragkörper und Reibschichten können auf die unterschiedlichsten Weisen miteinander verbunden werden. Beispielsweise können beide zunächst separat als Grünkörper gefertigt werden. Hierbei werden üblicherweise die Verstärkungsfasern mit polymeren Bindern vermischt und anschließend in einer Pressform ausgehärtet. Diese Grünkörper werden dann einer Pyrolyse unter Schutzgasatmosphäre unterzogen, wodurch CFC-Körper erhalten werden. Die pyrolysierten Grünkörper werden dann üblicherweise miteinander verklebt und das so entstandene Laminat wird erneut pyrolysiert. Dabei entsteht ein poröser faserverstärkter Kohlenstoffkörper. Dieser wird schließlich, wie bereits oben beschrieben der Silizierung unterzogen. Die zuvor beschriebenen Risse und Poren reichen meist von der Oberfläche der Reibschicht bis zu der Verbindungsstelle zwischen Tragkörper und Reibschicht. Die oben beschriebenen Einflüsse können daher zu lokaler Delamination der Reibschichten führen, d.h. die Reibschicht löst sich lokal vom Tragkörper ab. Dies ist in Figur 1 illustrativ dargestellt.

Document EP1632465A1 offenbart ein Verfahren zur Herstellung einer durch Nanopartikel modifizierten Carbon-Keramik-Bremsscheibe.

Dokument WO2006/115755A2 offenbart ein Verfahren zur Herstellung einer von Kohlefaserverstärkten keramischen Bremsscheibe.

Die Aufgabe der vorliegenden Erfindung ist es daher eine keramische Bremsscheibe mit verbessertem Oxidationsschutz und, im Falle von einer mehrschichtigen Bremsscheibe, höherer Delaminationsbeständigkeit bereitzustellen.

Die Aufgabe wird erfindungsgemäß durch eine Bremsscheibe sowie durch ein Verfahren zur Herstellung einer Bremsscheibe gemäß dem Wortlaut der Ansprüche gelöst.

Der erste Aspekt der vorliegenden Erfindung betrifft eine Verstärkungsfasern, matrixbildendes Silicium und Siliciumcarbid enthaltende Bremsscheibe welche auf ihrer Oberfläche Poren und/oder Risse aufweist, die sich in das Innere der Bremsscheibe erstrecken. Erfindungsgemäß sind zumindest die Poren und/oder Risse, die sich von der für eine Reibung zwischen der Bremsscheibe und einem Bremsbelag vorgesehenen Oberfläche der Bremsscheibe (im Folgenden auch "Reibfläche" genannt) befinden, mit einem weiteren Material gefüllt. Die erfindungsgemäße Bremsscheiben weist im Vergleich zu solchen ohne mit einem weiteren Material gefüllte Poren eine deutlich höhere Oxidationsbeständigkeit und, im Falle von mehrschichtigen Bremsscheiben, zusätzlich eine deutlich höhere Delaminationsbeständigkeit auf. Gleichzeitig wird die Bremswirkung nicht beeinträchtigt.

Figur 1 zeigt eine schematische Darstellung einer Bremsscheibe (1) mit einer Reibfläche (2), bei welcher an einer Stelle (3) Delamination stattgefunden hat, das heißt, die Reibfläche (2) hat sich an dieser Stelle vom Tragkörper abgelöst. Zur Verdeutlichung der Reibfläche (2) sind, wie in vielen Bremsscheiben üblich, Perforationsbohrungen (4) abgebildet. Schließlich besitzt die in Figur 1 beispielhaft gezeigte Bremsscheibe einen Bremsscheibentopf (5), der an den Bremsscheibenring (6) montiert ist.

Als Bremsbelag wird im Rahmen der vorliegenden Erfindung ein Bauteil verstanden, welches zusammen mit der Bremsscheibe tribologisch die gewünschte Bremswirkung erzielt. Das Material des Bremsbelags ist dabei nicht eingeschränkt und es können alle für keramische Bremsscheiben geeigneten Bremsbeläge eingesetzt werden.

Der Begriff "Bremsscheibe" kann im Rahmen der vorliegenden Erfindung den Bremsscheibenring aber auch den Bremsscheibenring in Kombination mit einem Bremsscheibentopf bezeichnen, wobei es möglich ist, dass der Bremsscheibentopf mechanisch an den Bremsscheibenring montiert wird oder dass der Bremsscheibentopf mit dem Bremsscheibenring untrennbar verbunden, beispielsweise angegossen ist. Es ist jedoch auch möglich, dass die gesamte Bremsscheibe, inklusive dem Bremsscheibentopf, einstückig ausgestaltet ist, beispielsweise aus demselben Material oder der selben Materialzusammensetzung besteht.

Bei keramischen Bremsscheiben sind Bremsscheibenring und Bremsscheibentopf üblicherweise aus unterschiedlichen Materialien gefertigt, wobei zumindest die Reibfläche des Bremsscheibenrings aus keramischem Material besteht oder zumindest zu einem Großteil, d.h. über 50 Gew.-%, enthält.

Die Bremsscheibe der vorliegenden Erfindung enthält matrixbildendes Silicium. Dies ist typisch für die Silizierung von CFC-Körpern mit flüssigem Silicium. Dabei entsteht ein Gefüge, in dem sich um noch vorhandene Kohlenstoffanteile, wie z.B. Carbonfasern, eine Siliciumcarbidschicht befindet, welche wiederum von nicht reagiertem Silicium umgeben ist. Der Anteil an freiem Silizium in der erfindungsgemäßen Bremsscheibe beträgt bevorzugt mindestens 3 Gew.-%, weiter bevorzugt mindestens 5 Gew.-%.

Als Reibfläche wird im Rahmen der vorliegenden Erfindung die Oberfläche der Bremsscheibe verstanden, die für eine Reibung zwischen der Bremsscheibe und einem Bremsbelag zur Erzielung der gewünschten Bremswirkung vorgesehen ist.

Die Risse und Poren, die erfindungsgemäß mit einem weiteren Material gefüllt sind, sind jene, die nach der Silizierung und dem darauffolgenden Abkühlen bei der Herstellung der Bremsscheibe vorhanden sind. Die beim Abkühlen nach der Silizierung der Bremsscheibe, aufgrund unterschiedlicher Wärmeausdehnungskoeffizienten der in der Bremsscheibe enthaltenen Materialien, entstehenden Risse und Poren haben üblicherweise eine Porengröße im Bereich von 0,001-500 µm. Die Porengröße wird dabei definiert als die Breite des Risses oder der Durchmesser der Pore an der Oberfläche der Bremsscheibe. Diese Poren und Risse sind daher von denen zu unterscheiden, die in dem carbonisierten Zwischenprodukt der Bremsscheibe, dem CFC-Körper, vorliegen. Wie eingangs beschrieben und in Falle der Verwendung von Carbonfasern als Verstärkungsfasern, werden zunächst CFC-Körper hergestellt. Diese sind porös. Bei der anschließenden Silizierung dringt flüssiges Silicium in die Poren des CFC-Vorkörpers ein und reagiert mit dem Kohlenstoff zu SiC. Nach dem Abkühlen ist der keramische Bremsscheibenring nach derzeitigem Stand der Technik im Prinzip fertig und einsatzbereit. Auf die zu diesem Zeitpunkt vorhandenen Poren und Risse liegt der Fokus der vorliegenden Erfindung. Das Material, das die Poren und Risse begrenzt, umfasst daher, anders als bei den Poren im CFC-Vorkörper, bereits SiC und Silicium.

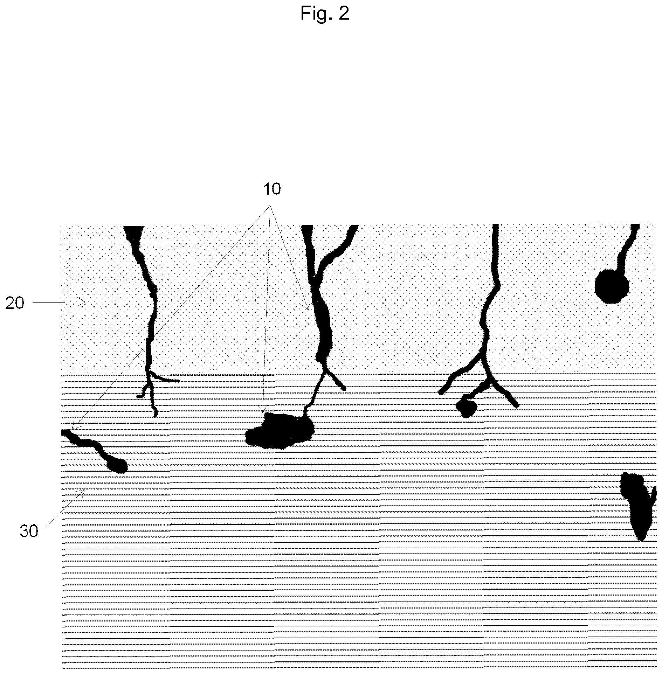

Erfindungsgemäß sind die Poren oder Risse vollständig mit dem erfindungsgemäßen, weiteren Material gefüllt. Es reicht jedoch auch aus, dass das Material die Poren oder Risse nur soweit ausfüllt, dass die Oberfläche der noch nicht gefüllten Poren oder Risse nach der Füllung weitestgehend mit dem Material bedeckt ist. Dies ist anhand von Schliffbildern, vorzugsweise mittels Mikroskop festzustellen. Das Adjektiv "gefüllt" soll daher in diesem Zusammenhang nichts über den Grad der Befüllung aussagen, sondern erfordert lediglich, dass sich das betreffende Material in den Poren oder Rissen befindet. Figur 2 zeigt eine schematische Darstellung eines möglichen Schliffbildes quer zur Reibfläche. Dabei ist die Reibschicht (20) auf dem Tragkörper (30) angeordnet. Die erfindungsgemäß gefüllten Poren (10) und Risse (10) reichen dabei von der Reibfläche in das Innere der Bremsscheibe.

Das Material mit dem die Poren oder Risse gefüllt sind, enthält präkeramischen Polymeren und/oder deren entsprechenden Keramiken.

Es ist daher auch möglich, dass sowohl das Material mit dem die Poren und Risse gefüllt sind, als auch das übrige Material der Bremsscheibe, SiC enthält. Das erfindungsgemäß "weitere Material" in den Poren und Rissen muss also nicht zwangsläufig in seiner Zusammensetzung von den übrigen in der Bremsscheibe enthaltenen Materialien verschieden sein. Die Unterscheidung der Materialien in den Poren gegenüber den übrigen Materialien ist allein darin zu sehen, dass sie sich in den Poren oder Rissen befinden.

Erfindungsgemäß umfasst das Material mit dem die Poren und Risse gefüllt sind präkeramische Polymere und/oder deren entsprechende Keramiken. Die präkeramischen Polymere sind leicht zu infiltrieren und lassen sich bei verhältnismäßig geringen Temperaturen in Ihre entsprechende Keramik umwandeln. Bevorzugte präkeramische Polymere sind Polysilazane, Polysiloxane (Silikone), Polysilane und Polycarbosilane. Am meisten bevorzugt sind Polysilazane und Polysiloxane, da diese besonders gut an das zu infiltrierende keramische Substrat anbinden. Grundsätzlich sind bei allen präkeramischen Polymeren solche mit einer möglichst hohen keramischen Ausbeute bevorzugt, da bei diesen die Schrumpfung bei der Keramisierung geringer ausfällt und damit die Poren und Risse mehr gefüllt sind, als bei der Verwendung von präkeramischen Polymeren mit geringerer keramischen Ausbeute.

Weiter bevorzugt enthalten die präkeramischen Polymere Füllstoffe. Diese Füllstoffe umfassen vorzugsweise Feststoffpartikel aus Bor-enthaltendem Material, Keramik, Metall, Metalloxid und Metallcarbid. Die Füllstoffe führen insbesondere bei großen Poren und Rissen zu einem höheren Füllgrad und damit einer besseren Ausfüllung, da sie bei einer thermischen Umwandlung des präkeramischen Polymers und der darauf folgenden Abkühlung nicht schrumpfen. Bevorzugte Füllstoffe sind Metallcarbide und -boride sowie Silicium. Weiter bevorzugte Füllstoffe sind Siliciumpulver, Siliciumcarbid-Pulver und Titanborid-Pulver.

Nach einem nicht erfindungsgemäßen Ausführungsbeispiel umfasst das Material in den Poren und Rissen Metallcarbide, bevorzugt Siliziumcarbid, welches bevorzugt unterschiedliche Domänen von Feststoffen aus Bor-enthaltendem Material, Keramik, Metall, Metalloxid und Metallcarbid. aufweist. Diese Füllung der Poren oder Risse kann beispielsweise dadurch hergestellt werden, dass die Poren oder Risse mit präkeramischen Polymeren gefüllt werden, die Siliciumcarbid-Pulver als Füllstoff enthalten und mittels eines thermischen Prozesses die Polymere in die entsprechende Keramik umgewandelt werden. So ist es möglich und auch bevorzugt, dass die Füllung der Poren oder Risse SiC aufweist, welches Domänen enthält, die wiederum ebenfalls SiC aufweisen. Die genannten Vorteile der Erfindung sind bei diesen Ausführungsformen besonders ausgeprägt.

Als eine weitere Ausführungsform der vorliegenden Erfindung enthält das weitere Material in den Poren oder Rissen präkeramische Polymere die teilweise in die entsprechende Keramik umgewandelt sind. Das Material, dass die Poren und Risse füllt, umfasst also eine Mischung aus präkeramischen Polymeren und deren entsprechende Keramiken. Dies ist dadurch zu erreichen, dass die keramische Bremsscheibe, deren Poren oder Risse mit präkeramischen Polymeren gefüllt sind, einem thermischen Prozess unterzogen wird. Der Vorteil dieser Ausführungsform ist, dass der harte keramische Anteil zur Verschleißbeständigkeit beiträgt, während der weichere Polymeranteil die Poren und Risse dicht hält.

Der zweite Aspekt der vorliegenden Erfindung betrifft ein Verfahren zur Herstellung einer Bremsscheibe enthaltend Verstärkungsfasern und Siliciumcarid, welches die folgenden Schritte aufweist:
i. Silizieren eines Verstärkungsfasern und Kohlenstoff enthaltenden Vorkörpers für eine Bremsscheibe, wobei nach der Silizierung und dem darauffolgenden Abkühlen Risse und Poren in dem Vorkörper entstanden sind,
ii. Imprägnieren des silizierten Vorkörpers zumindest auf der für eine Reibung zwischen der Bremsscheibe und einem Bremsbelag vorgesehenen Oberfläche der Bremsscheibe mit einem flüssigen Material,
iii. Entfernen des überschüssigen flüssigen Materials auf der Oberfläche der Bremsscheibe und
iv. Verfestigung des flüssigen Materials.

Unter dem Begriff Silizieren ist, wie weiter oben bereits ausgeführt, die Infiltration des CFC-Vorkörpers mit flüssigem Silizium zu verstehen. Dieser Verfahrensschritt (i) findet geeigneterweise bei Temperaturen oberhalb der Schmelztemperatur von Silizium unter Ausschluss von Sauerstoff statt.

Das flüssige Material umfasst sämtliche im Rahmen des ersten Aspekts der vorliegenden Erfindung beschriebenen Materialien, mit welchen die Poren oder Risse der Bremsscheibe gefüllt sind, vorzugsweise eine Schmelze, Lösung oder Suspension von präkeramischen Polymeren.

Hierbei ist unter einer Schmelze auch eine bei Raumtemperatur flüssige Substanz zu verstehen. Auch dieser Verfahrensschritt (ii) findet bevorzugt unter Ausschluss von oxidativen Gasen statt. Grundsätzlich muss das flüssige Material hinsichtlich seiner Viskosität und Oberflächenspannung für die Infiltration geeignet sein. Die Wahl der geeigneten Viskosität und Oberflächenspannung gelingt dabei durch einfaches ausprobieren. Maßnahmen zur Modifizierung der Oberflächenspannung und Viskosität, wie beispielsweise die Wahl des Molekulargewichts des Polymers, die Wahl der Temperatur und gegebenenfalls die Wahl und Menge eines Lösungsmittels sind dem Fachmann bekannt. Beim Imprägnieren (Schritt ii) wird das flüssige Material bevorzugt mittels Pinsel, Spachtel, Schwamm oder ähnliche Werkzeuge auf die Oberfläche der silizierten Bremsscheibe aufgebracht, wobei es durch Kapillarkräfte in die Poren oder Risse eindringt.

Es ist auch möglich und bevorzugt die Imprägnierung mit einem Tauchverfahren durchzuführen. Hierbei ist es bevorzugt, dass zumindest die Reibfläche der Bremsscheibe mit dem flüssigen Material bedeckt ist, da so eine vollständige Imprägnierung der Poren und Risse gewährleistet werden kann. Zusätzlich wird die Imprägnierung mittels Tauchverfahren bevorzugt durch Anlegen eines Vakuums vor der Imprägnierung und/oder Anlegen eines Überdrucks während der Imprägnierung unterstützt.

Als besonders geeignetes Verfahren kann die Imprägnierung über ein 2 Kammersystem durchgeführt werden. Dabei wird zunächst in einer mit silizierten Bremsscheiben bestückten ersten Kammer mittels Vakuumtechnik ein Unterdruck angelegt, bevorzugt zwischen 0,1-500 mbar. Anschließend wird die erste Kammer mit dem Imprägnat, also den erfindungsgemäßen flüssigen Material, bevorzugt ein präkeramisches Polymer, welches sich in einer zweiten Kammer befindet, geflutet. Danach wird während einer Haltezeit von wenigen Minuten bis mehreren Stunden, bevorzugt 5 Minuten bis 10 Stunden, ein Überdruck, bevorzugt von 1 bis 10 bar angelegt. Anschließend wird das Imprägnat aus der ersten Kammer gezogen und die erste Kammer mit Luft oder einer anderen geeigneten Gasatmosphäre geflutet.

Gemäß Schritt iii) wird das überschüssige Material von der Oberfläche der Bremsscheibe bevorzugt mittels Wischer, Spachtel oder Lappen entfernt.

Die Verfestigung (Schritt iv) des flüssigen Materials geschieht im Falle einer Schmelze mittels Abkühlen. Im Falle einer Suspension oder Lösung, kann die Verfestigung auch nur das Trocknen der Suspension, beziehungsweise das Verdampfen des Lösungsmiteis bedeuten. Für den Fall, dass eine Schmelze oder Lösung eines präkeramischen Polymers verwendet wird, wird dieses bevorzugt zusätzlich thermisch vernetzt, wobei das Temperaturprofil, die Maximaltemperatur und die Gasatmosphäre entsprechend des verwendeten Polymers zu wählen sind. Bei Polysilazanen, Polysiloxanen, Polysilanen und Polycarbosilanen liegen die Maximaltemperaturen üblicherweise im Bereich von wenigen hundert Grad Celsius, bevorzugt zwischen 100°C und 400°C.

Nach der Verfestigung eines präkeramischen Polymers ist es bevorzugt das Polymer thermisch zumindest teilweise oder vollständig in die entsprechende Keramik umzuwandeln. Auch hierbei hängen die Parameter wie Temperaturprofil und Maximaltemperatur von der Wahl des Polymers ab. Grundsätzlich liegt der Temperaturbereich in dem eine Keramisierung eines präkeramischen Polymers stattfindet zwischen 400 und 1000°C.

Bevorzugt finden sämtliche Schritte i) bis iv) unter Ausschluss von oxidativen Gasen statt.

\Bevorzugt wird die nach dem erfindungsgemäßen Verfahren hergestellte Bremsscheibe einer abschließenden mechanischen Bearbeitung, z.B. Schleifen, Polieren, Auswuchten, unterzogen.

### Vergleichsbeispiel

### Herstellung eines Tragkörpers

Zur Herstellung eines keramischen Bremsscheibenrings mit einem Durchmesser von 420 mm und einer Dicke von 40 mm wird eine Mischung bestehend Carbonfaserbündel, Phenolharz und weiteren Füllstoffen, unter anderem Graphit, in eine entsprechende Form gegeben. Die Carbonfaserbündel sind dabei von einer Kohlenstoffmatrix zusammengehalten und haben eine Mindestlänge von 0,5 mm. Die befüllte Form wird unter erhöhter Temperatur und erhöhtem Druck ausgehärtet. Der so entstandene Carbonfaserverstärkte Kunststoff (CFK) wird bei 1000°C carbonisiert, wobei ein CFC-Vorkörper entsteht.

### Herstellung einer Reibschicht

Eine Mischung aus Phenolharz, Carbonfasern und weiteren Füllstoffen wird unter erhöhter Temperatur und erhöhtem Druck zu einer 3 mm dicken Schicht abgepresst. Diese wird anschließend bei 1000 °C unter Stickstoffatmosphäre zu einem CFC-Körper carbonisiert.

### Herstellung eines Bremsscheibenrings

Die CFC-Vorkörper für Tragkörper und Reibschicht werden mit einem Kleber auf Phenolharzbasis verklebt und das Laminat wird mit flüssigem Silizium infiltriert. Während der hierfür erforderlichen Aufheizung auf etwa 1500°C carbonisiert gleichzeitig die Klebeschicht zwischen Tragkörper und Reibschicht. Nach erfolgter Infiltration und Abkühlung erhält man einen keramischen Bremsscheibenring, der, selbstverständlich nach abschließender mechanischer Bearbeitung, im Prinzip einsatzbereit ist. Der Bremsscheibenring weist die üblichen Risse und Poren auf.

### Beispiel gemäß der vorliegenden Erfindung

Der nach dem Vergleichsbeispiel hergestellte keramische Bremsscheibenring wird in eine Vakuumkammer gegeben und der Druck wird auf etwa 10 mbar abgesenkt. Anschließend wird eine überschüssige Menge der Polysiloxan-Lösung Silres Ren60^{®} der Firma Wacker in die Kammer gegeben. Sobald der Bremsscheibenring komplett von dem Polymer bedeckt ist, wird ein Überdruck von 5 bar während 45 Minuten angelegt. Danach wird das überschüssige Polysiloxan abgelassen, der Druck auf Atmosphärendruck gebracht und das an der Oberfläche des Bremsscheibenrings noch haftende, überschüssige Polymer mit einem Wischer entfernt.

Dieser imprägnierte Bremsscheibenring wird anschließend auf 300°C erhitzt und während 20 Minuten auf dieser Temperatur gehalten, wodurch das Polysiloxan vernetzt und damit aushärtet. Anschließend wird die Temperatur auf 750°C erhöht, wodurch sich das vernetzte Polysiloxan während 2 Stunden in die entsprechende Keramik umwandelt.

Abschließend wird der Bremsscheibenring mit dem Bremsscheibentopf vereinigt und die Bremsscheibe mechanisch bearbeitet (Schleifen, Auswuchten). Die Zeichnung in Figur 2 zeigt deutlich, wie die Poren an der Oberfläche der Bremsscheibe gefüllt sind.

Mit den beiden Bremsscheiben gemäß Vergleichsbeispiel und Beispiel wurde ein Delaminationstest, der sogennante Salz-Nass-Kalt-Test (SNK-Test) durchgeführt. Der SNK-Test basiert auf dem Standard-Test ISO/TC22/SC2 N557, der eine Serie bestimmter Bremszyklen umfasst um die Reibeigenschaften einer Bremsscheibe zu messen und zu dokumentieren. Im SNK-Test werden die Bremsscheiben, bevor und während sie dem Standard-Test unterzogen werden zusätzlich mit einer Lösung behandelt, die 3,0 Gew.-% NaCl und 0,4 Gew.-% CaCl₂ enthält. Zusätzlich wird nach dem Einbremsen und der ersten Druckreihe (beides im Standard-Test definiert) die Bremsscheibe mit flüssigem Stickstoff auf -20°C bis -25°C abgekühlt und 30 Minuten lang auf dieser Temperatur gehalten bevor die Standard-Test Prozedur fortgeführt wird. Um die Delaminationsbeständigkeit zu messen, wird diese Prozedur so oft wiederholt, bis Delamination auftritt. Die Anzahl der Testzyklen ist ein Maß für die Performance der Bremsscheibe.

Die Bremsscheibe gemäß Vergleichsbeipiel wies nach 20 Zyklen Delamination auf, während die Bremsscheibe gemäß dem Beispiel der vorliegenden Erfindung erst bei 31 Zyklen Delamination zeigte. Die erzielte Verbesserung der Delaminationsbeständigkeit der erfindungsgemäßen Bremsscheibe gegenüber einer keramischen Bremsscheibe ohne die erfindungsgemäße Behandlung, d.h. ohne mit einem weiteren Material gefüllte Poren und Risse, beträgt im SNK-Test daher über 50 %.

## Patentansprüche

1. Bremsscheibe umfassend Verstärkungsfasern, matrixbildendes Silicium und Siliciumcarbid, welche auf ihrer Oberfläche Poren und/oder Risse aufweist, die sich in das Innere der Bremsscheibe erstrecken, **dadurch gekennzeichnet, dass** zumindest die Poren und/oder Risse, die sich von der für eine Reibung zwischen der Bremsscheibe und einem Bremsbelag vorgesehenen Oberfläche der Bremsscheibe befinden, originär durch einen Schritt des Silizierens und einem darauffolgenden Abkühlen bei der Herstellung der Bremsscheibe entstanden sind, mit einem weiteren Material umfassend präkeramische Polymere und/oder deren entsprechende Keramiken gefüllt sind.

2. Bremsscheibe nach Anspruch 1, **dadurch gekennzeichnet, dass** die präkeramischen Polymere ausgewählt sind aus der Gruppe bestehend aus Polysilazanen, Polysiloxanen, Polysilanen und Polycarbosilanen.

3. Bremsscheibe nach einem der Ansprüche 1 oder 2, **dadurch gekennzeichnet, dass** die präkeramischen Polymere Füllstoffe enthalten.

4. Verfahren zur Herstellung einer Bremsscheibe nach einem der Ansprüche 1 bis 3 enthaltend Verstärkungsfasern und Siliciumcarbid, umfassend die folgenden Schritte:
i. Silizieren eines Verstärkungsfasern und Kohlenstoff enthaltenden Vorkörpers für eine Bremsscheibe, wobei nach der Silizierung und dem darauffolgenden Abkühlen Risse und Poren in dem Vorkörper entstanden sind,
ii. Imprägnieren des silizierten Vorkörpers zumindest auf der für eine Reibung zwischen der Bremsscheibe und einem Bremsbelag vorgesehenen Oberfläche der Bremsscheibe mit einem flüssigen Material,
iii. Entfernen des überschüssigen flüssigen Materials auf der Oberfläche der Bremsscheibenrings und
iv. Verfestigung des flüssigen Materials,
wobei das flüssige Material eine Schmelze, Lösung oder Suspension eines präkeramischen Polymeren, umfasst.

5. Verfahren nach Anspruch 4, **dadurch gekennzeichnet, dass** die Verfestigung in Schritt iv) eine thermische Vernetzung des präkeramischen Polymers ist.

6. Verfahren nach Anspruch 5, **dadurch gekennzeichnet, dass** nach Schritt iv) das vernetzte präkeramische Polymer thermisch zumindest teilweise in die entsprechende Keramik umgewandelt wird.

## Claims

1. Brake disc, which includes reinforcing fibers, silicon or silicon carbide forming a matrix and has pores and/or cracks on its surface that extend into the interior of the brake disc, **characterized in that** at least the pores and/or cracks found in a brake disc surface intended to provide friction between the brake disc and a brake lining were originally formed through a siliconizing step and subsequent cooling during the manufacture of the brake disc, and are filled with an additional material including preceramic polymers and/or their corresponding ceramics.

2. Brake disc according to claim 1, **characterized in that** the preceramic polymers are selected from the group consisting of polysilazanes, polysiloxanes, polysilanes and polycarbosilanes.

3. Brake disc according to one of claims 1 or 2, **characterized in that** the preceramic polymers contain fillers.

4. Process for manufacturing a brake disc according to one of claims 1 to 3 containing reinforcing fibers and silicon carbide, comprising the following steps:
i. siliconizing a preliminary body containing reinforcing fibers and carbon for a brake disc, wherein cracks and pores have formed in the preliminary body after siliconizing and subsequent cooling,
ii. impregnating the siliconized preliminary body with a liquid material at least on the surface of the brake disc that is intended to provide friction between the brake disc and a brake lining,
iii. removing the excess liquid material on the surface of the brake disc ring and
iv. solidifying the liquid material,
wherein the liquid material comprises a melt, a solution or suspension of a preceramic polymer.

5. Process according to claim 4, **characterized in that** the solidification in step iv) is a thermal crosslinking of the preceramic polymer.

6. Process according to claim 5, **characterized in that** after step iv) the crosslinked preceramic polymer is at least partially thermally transformed into the corresponding ceramic.

## Revendications

1. Disque de frein, qui comprend fibres de renforcement, silicium ou carbure de silicium formant une matrice, et qui présente sur sa surface des pores et/ou des fissures qui s'étendent à l'intérieur du disque de frein, **caractérisé en ce qu'**au moins les pores et/ou les fissures qui se trouvent dans une surface du disque de frein destinée à fournir une friction entre le disque de frein et une garniture de frein ont été formés à l'origine par une étape de siliconisation et un refroidissement suivant pendant la fabrication du disque de frein, et sont remplies avec un matériau supplémentaire comprenant des polymères précéramiques et/ou leurs céramiques correspondantes.

2. Disque de frein selon la revendication 1, **caractérisé en ce que** les polymères précéramiques sont choisis dans le groupe constitué de polysilazanes, polysiloxanes, polysilanes et polycarbosilanes.

3. Disque de frein selon l'une des revendications 1 ou 2, **caractérisé en ce que** les polymères précéramiques contiennent des charges.

4. Procédé de fabrication d'un disque de frein selon l'une des revendications 1 à 3 contenant fibres de renfort et carbure de silicium, comprenant les étapes suivantes:
i. siliconer un corps préliminaire contenant fibres de renforcement et carbone pour un disque de frein, dans lequel des fissures et des pores se sont formés dans le corps préliminaire après siliconisation et refroidissement suivant,
ii. imprégner le corps préliminaire siliconé d'un matériau liquide au moins sur la surface du disque de frein qui est destinée à fournir friction entre le disque de frein et une garniture de frein,
iii. enlever l'excès de matériau liquide sur la surface de l'anneau du disque de frein et
iv. solidifier le matériau liquide,
où le matériau liquide comprend une fusion, une solution ou une suspension d'un polymère précéramique.

5. Procédé selon la revendication 4, **caractérisé en ce que** la solidification à l'étape iv) est une réticulation thermique du polymère précéramique.

6. Procédé selon la revendication 5, **caractérisé en ce que**, après l'étape iv), le polymère précéramique réticulé est au moins partiellement transformé thermiquement en la céramique correspondante.
